# EUROPEAN PATENT APPLICATION

(11) **EP 4 278 884 A1**
(43) Date of publication of application: **22.11.2023**
(21) Application number: 23172540.9
(22) Date of filing: 10.05.2023
(51) Int. Cl.: A01F 15/00, A01F 15/08

(54) **BALER IMPLEMENT WITH VARIABLE PRESERVATIVE SYSTEM**

(30) Priority: 18.05.2022 US 202217663924
(71) Applicant: Deere & Company, Moline, IL 61265 (US)
(72) Inventor: KUCHIPUDI, Uday Kumar, 68163 Mannheim (DE)
(74) Representative: Stein, Stefan

(57) **Abstract**

A baler implement includes a baling chamber having an inlet spanning across a width thereof. The width of the inlet may be subdivided into a plurality of discrete regions. A preservative dispensing system includes a plurality of nozzles arranged across the width of the inlet. Each of the nozzles is independently controllable based on the crop density within a respective one of the discrete regions to dispense a preservative at different application rates within each of the discrete regions.

## Description

### TECHNICAL FIELD

The disclosure generally relates to a baler implement for forming material into a bale, and a method of operating the baler implement.

### BACKGROUND

Baler implements are configured to gather, compress, and shape a material into a bale. There are different types of balers which create rectangular or square bales, or cylindrical or round bales. Once the bale is formed within the baler implement, the bale is secured with a twine and/or net material and discharged from the baler implement. The bale of the material may then be easily transported.

The material may include, but is not limited to, biomass products, paper products, or agricultural feed products such as hay, alfalfa, etc. When baling agricultural feed materials, typical harvest operations include cutting and/or mowing the material in a field. Often, the crop material may be laid down onto the ground surface in a windrow, after which the baler implement may move along the windrow to gather the material and form the material into the bale.

If the crop material is to be used as silage, the crop material may be baled when having a high moisture content, and then fully wrapped with an oxygen barrier to seal the bale, thereby allowing the crop material to ferment and form silage. If the crop material is to be used as hay, then the crop material must be dried to a lower moisture content prior to baling. If the crop material includes a moisture content that is too high when baled, the hay may spoil.

In some situations, in which the moisture content of the crop material is higher than a desired moisture content, preservative may be applied to the crop material during the baling process. The preservative prevents the crop material from spoiling once baled. Typically, the preservative is applied to the crop material as the crop material is moved through an inlet and into a baling chamber of the baler implement, wherein the crop material is formed into the bale. The amount of preservative that is applied to the cop material, i.e., the application rate of the preservative, is dependent upon the moisture content of the crop material, but also on the quantity of the crop material that must be treated.

### SUMMARY

A baler implement is provided. The baler implement includes a baling chamber that is configured to form crop material into a bale. The baling chamber includes an inlet spanning across a width of the baling chamber. The inlet is configured for receiving the crop material therethrough and into the baling chamber. The width of the inlet may be subdivided to include or define a plurality of discrete regions. The baler implement further includes a pick-up. The pick-up is configured to gather the crop material from a ground surface and move the crop material through the inlet and into the baling chamber. A crop density sensor is positioned between the pick-up and the inlet. The crop density sensor is configured to detect a density of the crop material within each of the plurality of discrete regions across the width of the inlet. The baler implement further includes a preservative dispensing system having a plurality of nozzles arranged across the width of the inlet. Each of the plurality of nozzles is independently controllable based on the crop density within a respective one of the plurality of discrete regions to dispense a preservative at different application rates within each of the plurality of discrete regions.

In one aspect of the disclosure, each respective one of the plurality of discrete regions is associated with a respective one of the plurality of nozzles. The respective nozzle associated with a specific discrete region is used to dispense the preservative within the associated one of the discrete regions.

In one aspect of the disclosure, the baler implement may further include a preservative controller disposed in communication with the crop density sensor and the preservative dispensing system. The preservative controller may include a processor and a memory having a preservative algorithm stored thereon. The processor is operable to execute the preservative algorithm to determine the density of the crop material within each of the discrete regions across the width of the inlet from data received from the crop density sensor. The preservative controller may then determine a desired preservative application rate for each respective one of the discrete regions based on the density of the crop material within the respective discrete regions. The preservative controller may then control each of the nozzles independent of the other of the nozzles to dispense the desired preservative application rate for each respective one of the discrete regions.

In one aspect of the disclosure, each of the nozzles is associated with a respective one of the discrete regions. The processor is operable to execute the preservative algorithm to control one of the nozzles associated with the respective one of the plurality of discrete regions associated therewith to provide a first desired application rate to the respective one of the plurality of discrete regions. The processor may further be operable to execute the preservative algorithm to control another of the plurality of nozzles associated with another respective one of the discrete regions associated therewith to provide a second desired application rate to the another respective one of the discrete regions. The first application rate may be different than the second application rate, such that the application rate for each respective discrete region may be uniquely defined based on the crop density within that specific region.

In one aspect of the disclosure, the plurality of nozzles may include a first group of nozzles and a second group of nozzles. The first group of nozzles may be positioned above the inlet, and the second group of nozzles may be positioned below the inlet. In one implementation, the first group of nozzles may be independently controllable relative to the second group of nozzles.

In one aspect of the disclosure, the crop density sensor may include, but is not limited to, an optical sensor that is operable to sense an image of the crop material moving through the inlet. The density of the crop material may include and/or be defined as a mass flow rate of the crop material through the inlet. The mass flow rate may include a mass of the crop material moving through the inlet per unit time.

In one aspect of the disclosure, the width of the inlet extends in a transverse direction that is perpendicular to a direction of travel of the baler implement during operation.

In one aspect of the disclosure, each of the plurality of discrete regions does not overlap another of the plurality of discrete regions along the width of the inlet. In one implementation, the width of the inlet may be segmented to define at least one overlap region disposed along the width of the inlet and positioned between an adjacent pair of the discrete regions.

A method of operating a baler implement is also provided. The method includes gathering a crop material with a pick-up of the baler implement as the baler implement moves across a ground surface. The crop material is conveyed from the pick-up to a baling chamber of the baler implement through an inlet of the baling chamber. A density of the crop material moving from the pick-up and through the inlet is sensed with a crop density sensor. A preservative controller may then determine a respective region density within each of a plurality of discrete regions spread across a width of the inlet. The preservative controller may then determine a respective application rate for each respective one of the discrete regions of the width. The respective application rate for each respective one of the discrete regions is based on the respective region density of that respective one of the discrete regions. The preservative controller may then control a preservative dispensing system to apply a preservative at the respective application rate for each respective one of the plurality of discrete regions. The respective application rate for each respective one of the plurality of discrete regions may differ from the application rate for the other of the plurality of discrete regions.

In one aspect of the disclosure, the preservative dispensing system may include a plurality of nozzles. Controlling the preservative dispensing system may include controlling each of the nozzles independent of the other of the nozzles to dispense the desired preservative application rate for each respective one of the discrete regions.

In one aspect of the disclosure, each of the nozzles is associated with a respective one of the discrete regions. Controlling the preservative dispensing system may include controlling one of the nozzles associated with the respective one of the discrete regions associated therewith to provide a first desired application rate to the respective one of the discrete regions. Controlling the preservative dispensing system may further include controlling another of the nozzles associated with another respective one of the discrete regions associated therewith to provide a second desired application rate to the another respective one of the discrete regions. The first application rate may be different than the second application rate, such that the application rate for each individual discrete region may be controlled based on the crop density within that individual discrete region, and separate from the application rate for the other of the discrete regions.

In one aspect of the disclosure, the plurality of nozzles may include a first group of nozzles and a second group of nozzles. The first group of nozzles may be positioned above the inlet. The second group of nozzles may be positioned below the inlet. Controlling the preservative dispensing system may include controlling the first group of nozzles independent of the second group of nozzles.

Accordingly, the application rate for each individual discrete region may be controlled independently and separately from the application rate for the other of the discrete regions. This individual control enables the application rate for each individual discrete region to be defined based on the actual crop density or volume of crop material moving through that specific discrete region. As such, the total volume or amount of the preservative applied may be more accurately controlled as the crop material throughput through each discrete region changes over time and/or relative to the other discrete regions. This minimizes the amount of preservative used, thereby reducing preservative cost per bale.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of a traction unit and a baler implement.
FIG. 2 is a schematic front view of the baler implement.
FIG. 3 is a schematic front view of a preservative dispensing system of the baler implement.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

Referring to the Figures, wherein like numerals indicate like parts throughout the several views, a baler implement is generally shown at 20. The baler implement 20 may be configured as a square baler to produce bales having a rectangular or parallelepiped shape, or may alternatively be configured as a round baler to produce bales having a cylindrical shape. In the example implementation shown in the Figures, the baler implement 20 is configured as a round baler. However, it should be appreciated that the teachings of the disclosure may be applied to a square baler.

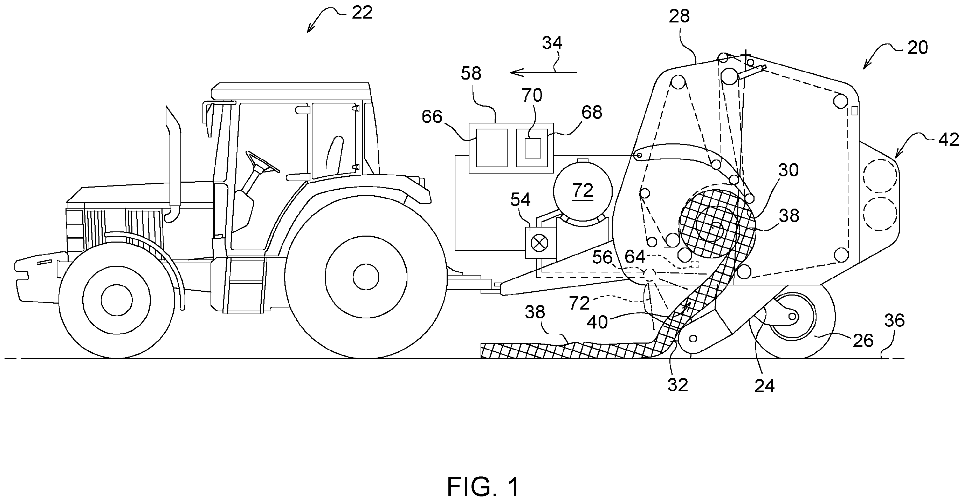

As shown in FIG. 1, a traction unit 22 or vehicle, such as but not limited to a tractor, may be coupled to the baler implement 20 for pulling and powering the baler implement 20. However, it should be appreciated that in other embodiments, the baler implement 20 may be self-propelled, in which case the traction unit 22 and the baler implement 20 are configured as a single, self-propelled vehicle.

The baler implement 20 may be moved across a field, whereby the baler implement 20 may gather and process crop material 38 to form a bale. The baler implement 20 may then secure the bale with a twine or wrap material. The bale may then be discharged or ejected from the baler implement 20.

Referring to FIG. 1, the example implementation of the baler implement 20 includes a frame 24, ground engaging devices 26, such as but not limited to wheels, and an input shaft, such as a power-take-off (PTO) shaft, which can receive rotational power from a power source, such as the traction unit 22.

The baler implement 20 includes a housing 28 or body, which generally shields various internal components of the baler implement 20. The housing 28 is attached to and supported by the frame 24. The housing 28 includes multiple wall sections or panels that form and/or define a baling chamber 30. The baling chamber 30 may alternatively be referred to as a compression chamber (such as when configured as a square baler) for forming the bale.

The baler implement 20 includes a pick-up 32. The pick-up 32 is disposed proximate the forward end of the frame 24 relative to a direction of travel 34 of the baler implement 20 during operation. The pick-up 32 gathers crop material 38 from a ground surface 36 and directs the gathered crop material 38 toward and through an inlet 40 of the baling chamber 30. The pickup may include, but is not limited to tines, forks, augers, conveyors, baffles, etc., for gathering and moving the crop material 38.

The baler implement 20 includes a wrap system 42. The wrap system 42 is operable to wrap the bale with a wrap material inside the baling chamber 30. Once the bale is formed to a desired size, the wrap system 42 feeds the wrap material into the baling chamber 30 to wrap the bale and thereby secure the crop material 38 in a tight package and maintain the desired shape of the bale. The wrap material may include, but is not limited to, a twine, a net mesh, or a solid plastic wrap.

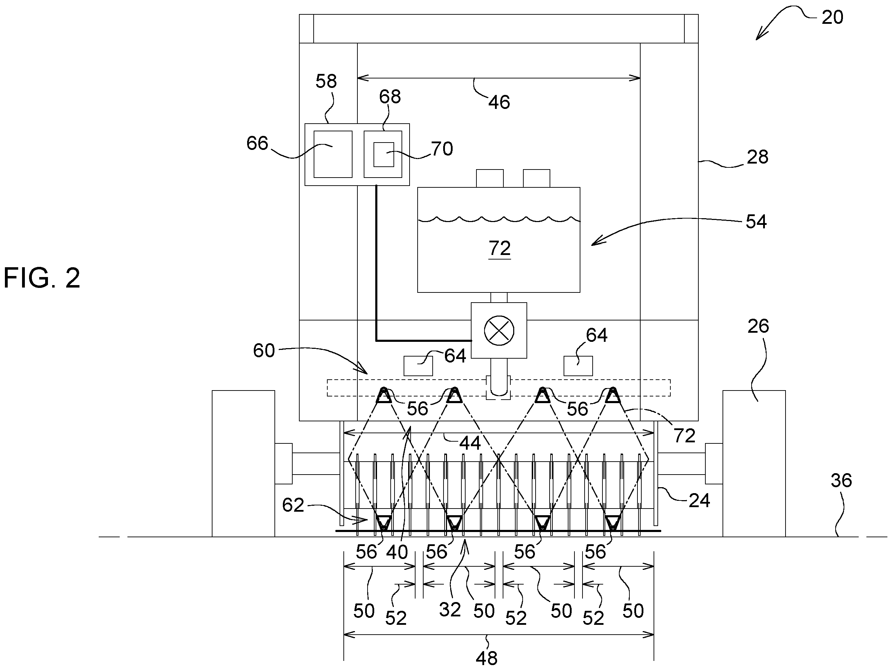

As described above, the baling chamber 30 includes the inlet 40 through which the crop material 38 passes into the baling chamber 30. Referring to FIG. 2, the inlet 40 spans at least partially across a width 44. The width 44 extends in a transverse direction that is generally perpendicular to the direction of travel 34 of the baler implement 20 during operation. In one implementation, the width 44 may extend a distance that is substantially equal to a width 46 of the baling chamber 30. In other words, the width 44 may be substantially equal to the width 46 of the baling chamber 30. In other implementations, the width 44 may be greater than the width 46 of the baling chamber 30. For example, the pick-up 32 may be configured to gather crops across a width 48 that is greater or wider than the width 46 of the baling chamber 30. As such, the width 44 may be defined by the width 48 of the pick-up 32.

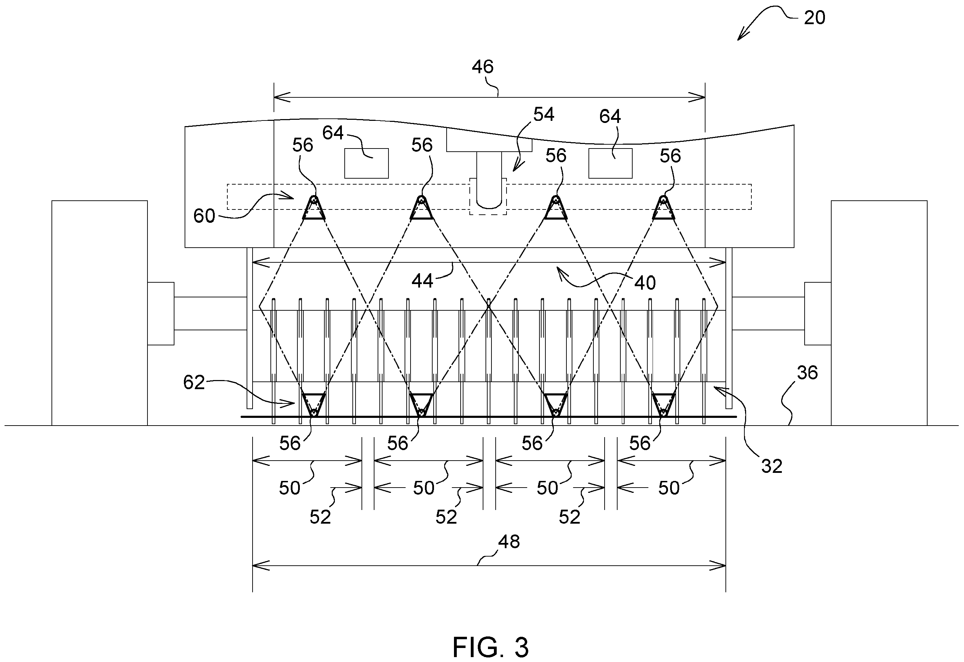

Referring to FIG 3, the width 44 includes and/or may be segmented to define a plurality of discrete regions 50. Each of the discrete regions 50 of the width 44 does not overlap with another of the discrete regions 50 along the width 44 of the inlet 40. The width 44 may further include and/or may be segmented to define one or more overlap regions 52 disposed along the width 44 of the inlet 40 and positioned between an adjacent pair of the plurality of discrete regions 50. As such, the width 44 may be defined by multiple discrete regions 50 with an overlap region 52 disposed between each pair of adjacent discrete regions 50.

The baler implement 20 further includes a preservative dispensing system 54. The preservative dispensing system 54 is configured to dispense a preservative 72 onto the crop material 38 moving through the inlet 40, prior to entering the baling chamber 30. The preservative 72 may include a liquid chemical composition that, when applied to the crop material 38 prevents or limits spoilage of the crop material 38 that may otherwise be caused by excessive moisture. The composition and operation of the preservative 72 is understood by those skilled in the art, not pertinent to the teachings of this disclosure, and are therefore not described in greater detail herein.

Referring to FIG. 3, the preservative dispensing system 54 may include a plurality of nozzles 56. The nozzles 56 are arranged across the width 44 of the inlet 40. Each of the nozzles 56 may be independently controllable relative to the other nozzles 56. The nozzles 56 may be independently controllable based on a characteristic of the crop material 38 moving through the inlet 40, such as but not limited to a moisture content of the cop material and/or a density or volume of the crop material 38.

In one implementation of the disclosure, each respective one of the discrete regions 50 is associated with a respective one of the nozzles 56 for dispensing the preservative 72 within the associated one of the discrete regions 50. In other words, the dispensing system includes at least one nozzle 56 dedicated to a specific one of the discrete regions 50 that is controllable to dispense the preservative 72 onto only that specific discrete region 50. It should be appreciated that a specific discrete region 50 may include multiple nozzles 56 dedicated thereto, but that those multiple nozzles 56 dedicated to that unique discrete region 50 do not apply or dispense the preservative 72 onto any other of the discrete regions 50.

Each of the nozzles 56 may be controlled based on the crop density within a respective one of the plurality of discrete regions 50 associated therewith to dispense the preservative 72 at different application rates within each of the discrete regions 50. For example, each of the nozzles 56 may be associated with a respective one of the discrete regions 50. A preservative controller 58 may control one of the nozzles 56 associated with the respective one of the discrete regions 50 associated therewith to provide a first desired application rate to the respective one of the discrete regions 50 associated with that nozzle 56. The preservative controller 58 may control another of the nozzles 56 associated with another respective one of the discrete regions 50 associated therewith to provide a second desired application rate to the another respective one of the discrete regions 50 associated with the another nozzle 56. The first application rate may be different than the second application rate, such that a different amount or quantity of the preservative 72 is applied to the different discrete regions 50.

In one aspect of the disclosure, the plurality of nozzles 56 may include a first group 60 of nozzles 56 and a second group 62 of nozzles 56. The first group 60 of nozzles 56 may be positioned above the inlet 40, whereas the second group 62 of nozzles 56 may be positioned below the inlet 40. The first group 60 of nozzles 56 may be independently controllable relative to the second group 62 of nozzles 56. It should be appreciated that, in one implementation of the disclosure, each of the first group 60 of nozzles 56 and each of the second group 62 of nozzles 56 may be independently controllable relative to all of the other nozzles 56 of the first group 60 and the second group 62 of nozzles 56. However, in other implementations of the disclosure, each discrete region 50 may include one or more nozzles 56 from the first group 60 associated therewith, and one or more nozzles 56 from the second group 62 associated therewith, with all of the nozzles 56 associated with that specific discrete region 50 being controlled together. As such, all of the nozzles 56 associated with one specific discrete region 50, whether part of the first group 60 or the second group 62 of nozzles 56, may be controlled independently of each other, or together as a set to dispense the preservative 72 onto that specific discrete region 50.

The baler implement 20 may further include a crop density sensor 64. The crop density sensor 64 may be positioned between the pick-up 32 and the inlet 40. The crop density sensor 64 may be configured to detect a density of the crop material 38 within each of the plurality of discrete regions 50 across the width 44 of the inlet 40. The density of the crop material 38 may include, but is not limited to, volume or mass of the crop material 38 at a specific location relative to the inlet 40 at a given time. Alternatively, the density may include, but is not limited to, a mass flow rate of the crop material 38 moving through the inlet 40 during a defined period of time. It should be appreciated that the desired amount of preservative 72 is dependent upon the mass or volume of the crop material 38 being treated. As such, detecting the mass or volume of the crop material 38 within each specific discrete region 50 enables the preservative controller 58 to selectably control the dispensing system within that specific discrete region 50 to obtain the desired application rate for the detected mass or volume in that specific discrete region 50.

In one implementation of the disclosure, the crop density sensor 64 may include, but is not limited to, an optical sensor. The optical sensor may be configured to sense an image of the crop material 38 moving through the inlet 40. The optical sensor may communicate sensed data, i.e., images, to the preservative controller 58, which may in turn analyze the images to detect and/or determine the mass or volume of the crop material 38 in each discrete region 50 of the width 44. In other implementations, the crop density sensor 64 may include a weight and/or size sensor that is operable to determine a weight distribution of the bale relative to each of the discrete regions 50, and/or a size distribution of the bale relative to each of the discrete regions 50. The distribution of the weight and/or size of the bale across the width 44 and relative to the discrete regions 50 may then be correlated to the respective quantity, mass, or volume of the crop material 38 in each of the discrete regions 50.

It should be appreciated that the crop density sensor 64 may include some other device capable of sensing data related to the volume, mass, or quantity of the crop material 38 within each respective one of the discrete regions 50, either indirectly or directly, and may differ from the example implementations described herein.

As described above, the bale implement includes the preservative controller 58. The preservative controller 58 is disposed in communication with the crop density sensor 64 and the preservative dispensing system 54. The preservative controller 58 is operable to receive data from the crop density sensor 64, and control operation of the preservative dispensing system 54. While the preservative controller 58 is generally described herein as a singular device, it should be appreciated that the preservative controller 58 may include multiple devices linked together to share and/or communicate information therebetween. Furthermore, it should be appreciated that the preservative controller 58 may be located on the baler implement 20 or located remotely from the baler implement 20, such as on an associated traction unit 22, e.g., a tractor.

The preservative controller 58 may alternatively be referred to as a computing device, a computer, a controller, a control unit, a control module, a module, etc. The preservative controller 58 includes a processor 66, a memory 68, and all software, hardware, algorithms, connections, sensors, etc., necessary to manage and control the operation of the crop density sensor 64 and the preservative dispensing system 54. As such, a method may be embodied as a program or algorithm operable on the preservative controller 58. It should be appreciated that the preservative controller 58 may include any device capable of analyzing data from various sensors, comparing data, making decisions, and executing the required tasks.

As used herein, "preservative controller 58" is intended to be used consistent with how the term is used by a person of skill in the art, and refers to a computing component with processing, memory 68, and communication capabilities, which is utilized to execute instructions (i.e., stored on the memory 68 or received via the communication capabilities) to control or communicate with one or more other components. In certain embodiments, the preservative controller 58 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The preservative controller 58 may be in communication with other components on the baler implement 20, such as hydraulic components, electrical components, and operator inputs within an operator station of an associated work vehicle. The preservative controller 58 may be electrically connected to these other components by a wiring harness such that messages, commands, and electrical power may be transmitted between the preservative controller 58 and the other components. Although the preservative controller 58 is referenced in the singular, in alternative embodiments the configuration and functionality described herein can be split across multiple devices using techniques known to a person of ordinary skill in the art.

The preservative controller 58 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 68 may include any non-transitory/tangible medium which participates in providing data or computer-readable instructions. The memory 68 may be non-volatile or volatile. Non-volatile media may include, for example, optical or magnetic disks and other persistent memory. Example volatile media may include dynamic random access memory (DRAM), which may constitute a main memory. Other examples of embodiments for memory 68 include a floppy, flexible disk, or hard disk, magnetic tape or other magnetic medium, a CD-ROM, DVD, and/or any other optical medium, as well as other possible memory devices such as flash memory.

The preservative controller 58 includes the tangible, non-transitory memory 68 on which are recorded computer-executable instructions, including a preservative algorithm 70. The processor 66 of the preservative controller 58 is configured for executing the preservative algorithm 70. The preservative algorithm 70 implements a method of operating the baler implement 20, described in detail below.

The method of operating the baler implement 20 includes gathering a crop material 38 with the pick-up 32 of the baler implement 20 as the baler implement 20 moves across the ground surface 36. The pick-up 32 conveys the crop material 38 to the baling chamber 30 of the baler implement 20 through the inlet 40.

Data relating to the density of the crop material 38 moving from the pick-up 32 and through the inlet 40 is sensed for each respective discrete region 50 of the width 44 with the crop density sensor 64. The preservative controller 58 may then determine a respective region density within each of the discrete regions 50 spread across the width 44. As described above, the density of the crop material 38 in each respective discrete region 50 may be defined as a mass or volume of the crop material 38 disposed within each respective discrete region 50 at a given time, or the mass or volume of the crop material 38 passing through each respective discrete region 50 during a given time period, i.e., mass flow rate.

As described above, the crop density sensor 64 may detect the density of the crop material 38 in each respective discrete region 50 of the width 44 in any suitable manner. For example, the crop density sensor 64 may capture an image of the crop material 38 across the width 44. The preservative controller 58 may then analyze the image to determine the mass or volume of crop material 38 within each respective discrete region 50. The preservative controller 58 may analyze several images captured during a defined period of time to determine a mass flow rate of the crop material 38.

Once the respective crop density for each respective discrete region 50 has been determined, the preservative controller 58 may then determine a respective application rate for each respective one of the discrete regions 50 across the width 44. The respective application rate may be defined as a mass or volume of preservative 72 per unit of time. The amount of preservative 72 required to treat the crop material 38 is dependent on the quantity, mass, or volume of the crop material 38. The amount of preservative 72 required increases with an increase in the quantity, mass, or volume of the crop material 38 to be treated. Similarly, the amount of the preservative 72 required decreases with a decrease in the quantity, mass, or volume of the crop material 38 to be treated. As such, the respective application rate for each respective one of the discrete regions 50 may be based on the respective region density of that respective one of the discrete regions 50. Accordingly, a discrete region 50 having a higher crop density will require a higher amount of preservative 72, i.e., a higher preservative application rate, when compared to a discrete region 50 having a lower crop density.

Once the application rate for each respective discrete region 50 has been determined, the preservative controller 58 may then control the preservative dispensing system 54 to apply the preservative 72 at the respective application rate for each respective one of the discrete regions 50. It should be appreciated that the respective application rate for each respective one of the discrete regions 50 may differ from the application rate for the other of the discrete regions 50. Accordingly, the application of the preservative 72 is varied across the width 44 based on the density or amount of the crop material 38, such that less preservative 72 may be applied in regions across the width 44 having a lower crop density, and/or more preservative 72 may be applied in regions across the width 44 having a higher crop density. By varying the application rate across the width 44 based on the actual volume or quantity of crop material 38 to be treated, the proper amount of preservative 72 for the given quantity of crop material 38 may be applied with using excess preservative 72.

In one implementation described above, the preservative dispensing system 54 may include the plurality of nozzles 56 spread across the width 44. The preservative controller 58 may control each of the nozzles 56 independent of the other of the plurality of nozzles 56 to dispense the desired preservative application rate for each respective one of the discrete regions 50. As described above, each discrete region 50 may have one or more nozzles 56 dedicated to that respective discrete region 50. The one or more nozzles 56 dedicated to a particular discrete region 50 may be controlled to apply the preservative 72 at the desired preservative application rate for the amount or quantity of the crop material 38 in that particular discrete region 50. Other nozzles 56 dedicated to other discrete regions 50 may be independently controlled to provide the preservative 72 at the desired preservative application rate appropriate for the amount of crop material 38 in the discrete region 50 associated with those nozzles 56.

For example, the preservative controller 58 may control one of the nozzles 56 associated with the respective one of the discrete regions 50 associated therewith to provide a first desired application rate to the respective one of the discrete regions 50. The preservative controller 58 may further control another of the nozzles 56 associated with another respective one of the discrete regions 50 associated therewith to provide a second desired application rate to the another respective one of the discrete regions 50. The first application rate may be different than the second application rate based on the difference between the crop density between the two different discrete regions 50.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A baler implement (20) comprising:
a baling chamber (30) configured to form crop material into a bale, the baling chamber (30) including an inlet (40) spanning across a width (44) for receiving the crop material therethrough;
wherein the width (44) includes a plurality of discrete regions (50);
a pick-up (32) configured to gather the crop material from a ground surface and move the crop material through the inlet (40) and into the baling chamber (30);
a crop density sensor (64) positioned between the pick-up (32) and the inlet (40), wherein the crop density sensor (64) is configured to detect a density of the crop material within each of the plurality of discrete regions (50) across the width (44) of the inlet (40); and
a preservative dispensing system (54) having a plurality of nozzles (56) arranged across the width (44) of the inlet (40), wherein each of the plurality of nozzles (56) is independently controllable based on the crop density within a respective one of the plurality of discrete regions (50) to dispense a preservative (72) at different application rates within each of the plurality of discrete regions (50).

2. The baler implement (20) set forth in claim 1, wherein each respective one of the plurality of discrete regions (50) is associated with a respective one of the plurality of nozzles (56) for dispensing the preservative (72) within the associated one of the plurality of discrete regions (50).

3. The baler implement (20) set forth in claim 1 or 2, further comprising a preservative controller (58) in communication with the crop density sensor (64) and the preservative dispensing system (54), the preservative controller (58) including a processor (66) and a memory (68) having a preservative algorithm (70) stored thereon, wherein the processor (66) is operable to execute the preservative algorithm (70) to:
determine the density of the crop material within each of the plurality of discrete regions (50) across the width (44) of the inlet (40) from data received from the crop density sensor (64);
determine a desired preservative application rate for each respective one of the plurality of discrete regions (50) based on the density of the crop material within each of the plurality of discrete regions (50); and
control each of the plurality of nozzles (56) independent of the other of the plurality of nozzles (56) to dispense the desired preservative application rate for each respective one of the plurality of discrete regions (50).

4. The baler implement (20) according to at least one of the preceding claims, wherein each of the plurality of nozzles (56) is associated with a respective one of the plurality of discrete regions (50), and wherein the processor (66) is operable to execute the preservative algorithm (70) to control one of the plurality of nozzles (56) associated with the respective one of the plurality of discrete regions (50) associated therewith to provide a first desired application rate to the respective one of the plurality of discrete regions (50), and control another of the plurality of nozzles (56) associated with another respective one of the plurality of discrete regions (50) associated therewith to provide a second desired application rate to the another respective one of the plurality of discrete regions (50), with the first application rate different than the second application rate.

5. The baler implement (20) according to at least one of the preceding claims, wherein the plurality of nozzles (56) includes a first group (60) of nozzles (56) positioned above the inlet (40), and a second group (62) of nozzles (56) positioned below the inlet (40).

6. The baler implement (20) according to at least one of the preceding claims, wherein the first group (60) of nozzles (56) is independently controllable relative to the second group (62) of nozzles (56).

7. The baler implement (20) according to at least one of the preceding claims, wherein the crop density sensor (64) includes an optical sensor operable to sense an image of the crop material moving through the inlet (40).

8. The baler implement (20) according to at least one of the preceding claims, wherein the width (44) of the inlet (40) extends in a transverse direction that is perpendicular to a direction of travel (34) during operation.

9. The baler implement (20) according to at least one of the preceding claims, wherein the density of the crop material includes a mass flow rate of the crop material through the inlet (40).

10. The baler implement (20) according to at least one of the preceding claims, wherein each of the plurality of discrete regions (50) does not overlap another of the plurality of discrete regions (50) along the width (44) of the inlet (40).

11. The baler implement (20) according to at least one of the preceding claims, wherein the inlet (40) includes at least one overlap region (52) disposed along the width (44) of the inlet (40) and positioned between an adjacent pair of the plurality of discrete regions (50).

12. A method of operating a baler implement (20), the method comprising:
gathering a crop material with a pick-up (32) of the baler implement (20) as the baler implement (20) moves across a ground surface;
conveying the crop material from the pick-up (32) to a baling chamber (30) of the baler implement (20) through an inlet (40) of the baling chamber (30);
sensing a density of the crop material moving from the pick-up (32) and through the inlet (40) with a crop density sensor (64);
determining a respective region density within each of a plurality of discrete regions (50) spread across a width (44) of the inlet (40), with a preservative controller (58);
determining a respective application rate for each respective one of the plurality of discrete regions (50) of the width (44) with the preservative controller (58), wherein the respective application rate for each respective one of the plurality of discrete regions (50) is based on the respective region density of that respective one of the plurality of discrete regions (50); and
controlling a preservative dispensing system (54) with the preservative controller (58) to apply a preservative (72) at the respective application rate for each respective one of the plurality of discrete regions (50), whereby the respective application rate for each respective one of the plurality of discrete regions (50) may differ from the application rate for the other of the plurality of discrete regions (50).

13. The method set forth in claim 12, wherein the preservative dispensing system (54) includes a plurality of nozzles (56), and wherein controlling the preservative dispensing system (54) includes controlling each of the plurality of nozzles (56) independent of the other of the plurality of nozzles (56) to dispense the desired preservative application rate for each respective one of the plurality of discrete regions (50).

14. The method set forth in claim 12 or 13, wherein each of the plurality of nozzles (56) is associated with a respective one of the plurality of discrete regions (50), and wherein controlling the preservative dispensing system (54) includes controlling one of the plurality of nozzles (56) associated with the respective one of the plurality of discrete regions (50) associated therewith to provide a first desired application rate to the respective one of the plurality of discrete regions (50), and controlling another of the plurality of nozzles (56) associated with another respective one of the plurality of discrete regions (50) associated therewith to provide a second desired application rate to the another respective one of the plurality of discrete regions (50), with the first application rate different than the second application rate.

15. The method according to at least one of the claims 12 to 14, wherein the plurality of nozzles (56) includes a first group (60) of nozzles (56) positioned above the inlet (40), and a second group (62) of nozzles (56) positioned below the inlet (40), and wherein controlling the preservative dispensing system (54) includes controlling the first group (60) of nozzles (56) independent of the second group (62) of nozzles (56).
